# EUROPEAN PATENT SPECIFICATION

(11) **EP 2 990 349 B1**
(45) Date of publication and mention of the grant of the patent: **06.09.2017**
(21) Application number: 15155485.4
(22) Date of filing: 04.06.2009
(51) Int. Cl.: B65D 41/00, B65D 51/24

(54) **Bottle cap**
Flaschendeckel
Bouchon de bouteille

(30) Priority: 23.09.2008 US 99328 P; 02.06.2009 US 476475
(43) Date of publication of application: 02.03.2016
(62) Divisional of application: 09816634.1
(73) Proprietor: International IP Holdings LLC, Bloomfield Hills, MI 48304 (US)
(72) Inventor: Krause, Andrew, Oxford, MI Michigan 48370 (US)
(74) Representative: Simpson, Kirsty Mairi

(56) References cited:
- EP-A1- 0 239 238
- EP-A1- 0 336 269
- EP-A1- 1 099 526
- FR-A1- 2 478 034
- US-A- 3 661 289

## Description

### BACKGROUND OF THE INVENTION

### 1. Field of the Invention

This invention relates to a cap for sealing a container, such as a bottle.

### 2. Background Art

Bottles or other containers intended to contain liquids require a cap that is capable of establishing a seal of the container which is effective to prevent leakage of the liquids contained therein. In some prior bottles, an internal foam closure or liner is disposed on an underside of the bottle cap for sealing purposes, typically glued to the bottle cap in a secondary process. As such, use of a foam liner introduces additional material and labor into the construction of the bottle cap. In addition, in the event that the foam liner becomes compromised, the sealing capabilities of the foam liner can be adversely affected, potentially resulting in leakage of the liquid contents. Leakage can also occur as a result of internal pressure changes in the container, such as can be introduced during freezing and subsequent thawing of the liquid contents, which adversely affect the seal between the foam liner and the container.

As a tamper-evident measure, bottles and other containers are often packaged with a plastic shrink sleeve extending at least partially over the container closure and downward onto the container itself. Unfortunately, these shrink sleeves can often be very difficult for a consumer to remove in order to open the container and gain access to the product therein.FR 2 478 034 discloses such a screw cap with a tamper-evident shrink sleeve, in accordance with the preamble of appended claim 1.

### BRIEF DESCRIPTION OF THE DRAWINGS

FIGURE 1 is a perspective view of a bottle cap according to the present invention;
FIGURE 2 is a top plan view of an interior of a bottle cap according to the present invention;
FIGURE 3 is a perspective view of the interior of a bottle cap according to the present invention;
FIGURE 4 is a cross-sectional view of a bottle cap according to the present invention taken along line 4-4 of FIG. 1; and
FIGURE 5 is a cross-sectional, partially cut away view of a bottle cap denoting exemplary dimensions in accordance with an aspect of the present invention.

### DETAILED DESCRIPTION OF THE INVENTION

As required, detailed embodiments of the present invention are disclosed herein; however, it is to be understood that the disclosed embodiments are merely exemplary of the invention that may be embodied in various and alternative forms. The figures are not necessarily to scale, and some features may be exaggerated or minimized to show details of particular components. Therefore, specific structural and functional details disclosed herein are not to be interpreted as limiting, but merely as a representative basis for teaching one skilled in the art to variously employ the present invention.

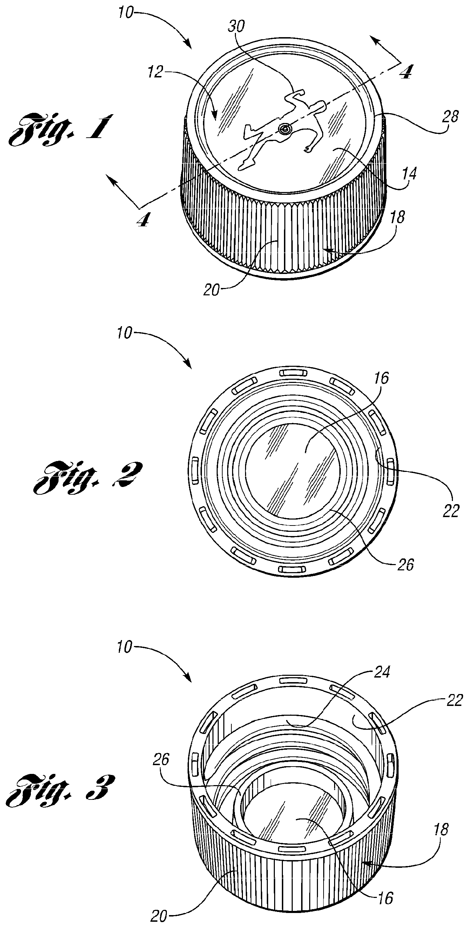

According to an aspect of the present invention, a leak-proof closure for a container is provided which also facilitates easier removal of tamper-evident sealing means on the exterior of the container. With reference to FIG. 1, a bottle cap in accordance with an aspect of the present invention is illustrated and designated generally by reference numeral 10. The bottle cap 10 may be used for sealing a container (not shown), such as a bottle, having a neck. The container may hold a liquid substance which, according to one non-limiting aspect of the present invention, may be a liquid energy supplement or an energy drink. Such a liquid energy supplement or energy drink may contain one or more of the following ingredients: niacin, vitamin B6 (e.g., as pyridoxine hydrochloride), folic acid, and vitamin B12 (e.g., as cyanocobalamin), taurine, glucuronolactone, malic acid, N-acetyl L-tyrosine, L-phenylalanine, caffeine, and citicoline.

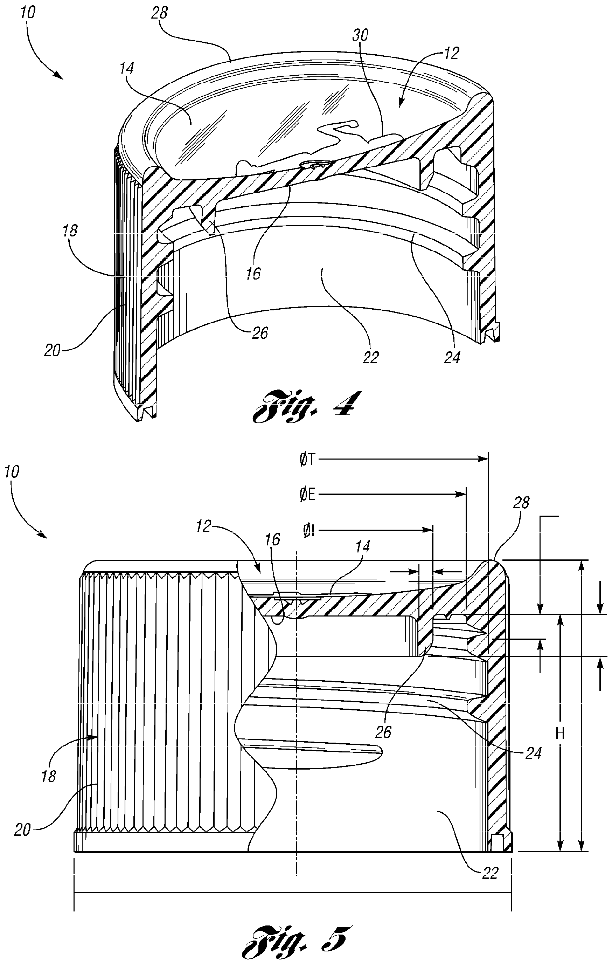

Referring again to FIG. 1, as well as to FIGS. 2-5, bottle cap 10 has a generally circular top wall 12 having a top face 14 and a bottom face 16. An annular outer skirt 18 having an outer surface 20 and an inner surface 22 depends downwardly from the outermost periphery of the top wall 12. The outer surface 20 may be ribbed, as shown in FIGS. 1 and 5, for easier gripping by a consumer. The inner surface 22 includes a threaded portion 24, which may have a standard helical configuration, arranged to cooperate with a correspondingly shaped threaded portion on an exterior of the container neck (not shown) in order to secure the bottle cap 10 to the container. According to a non-limiting aspect of the present invention, as depicted in FIG. 5, an outer diameter of the bottle cap 10 may be approximately 22,86 mm (0.9 inches) an inner diameter of the bottle cap 10 between the outer skirt inner surfaces 22 may be approximately 20,32 mm (0.8 inches), the height of the bottle cap 10 may be approximately 15,24 mm (0.6 inches), and the length of the outer skirt 18 to the top wall bottom face 16 may be approximately 12,7 mm (0.5 inches). Of course, it is understood that the bottle cap 10 according to the present invention is not limited to these absolute or relative dimensions.

The bottle cap 10 further includes an annular inner skirt 26, or plug, as depicted in FIGS. 2-5, arranged to scalingly engage within the inner diameter of the container neck. Inner skirt 26 also depends downwardly from the top wall 12, set radially inward from the outer skirt 18 in concentric relationship thereto. The inner skirt 26 also may act to guide the bottle cap 10 into position on the container, and may include a taper, as best shown in FIG. 5, which may further facilitate locating and inserting the inner skirt 26 with respect to the container neck. According to a non-limiting aspect of the present invention, as depicted in FIG. 5, an outer diameter of the inner skirt 26 may be approximately 15,24 mm (0.6 inches), an inner diameter of the inner skirt 26 may be approximately 12,7 mm (0.5 inches), a thickness of the inner skirt 26 may be approximately 0,732 mm (0.03 inches), and a depth of the inner skirt 26 may be approximately 2,286 mm (0.09 inches), wherein a length of the taper may be approximately 1,016 mm (0.04 inches). Therefore, the inner skirt 26 may have a length of about 20% of the length of the outer skirt 18. Again, it is understood that the bottle cap 10 according to the present invention is not limited to these absolute or relative dimensions.

When the bottle cap 10 is fitted onto the container, the inner skirt 26 contacts an inner surface of the container neck which abuts the top wall bottom face 16, such that the container neck is tightly received between the outer and inner skirts 18, 26, thereby sealing the container and impeding the loss of fluid therefrom. A tight interference fit may be created by properly sizing the inner skirt 26 and the container neck inner diameter in order to prevent the liquid contents of the container from leaking, even under conditions such as freezing/thawing which induce internal pressure changes in the container.

In further accordance with an aspect of the present invention, the bottle cap 10 may be injection molded and have a one-piece construction formed from a plastic material. According to one aspect of the present invention, the bottle cap 10 may be constructed from polypropylene, or from a co-polymer of polypropylene and ethylene propylene. The addition of ethylene propylene to the base polypropylene material may reduce brittleness and increase impact resistance of the bottle cap 10. Of course, it is understood that other materials are also contemplated for the construction of bottle cap 10.

Ingredients specific to liquid energy supplements or energy drinks, such as vitamin B6, vitamin B12, and folic acid, may oxidize and subsequently undergo an unappealing color change. When prior art foam liners are used for sealing purposes, soaking of the liquid into edges of the foam liner may result in oxidation, with the residue appearing as a dark substance which is typically unappealing to a consumer. Use of the bottle cap 10 with inner skirt 26 according to the present invention eliminates this problem encountered with liquid energy supplements or energy drinks. In addition, the plastic material used for construction of the bottle cap 10 offers a much higher level of impermeability to oxygen than does open cell foam used in prior art foam liners, such that the shelf life of the liquid energy supplement or energy drink can be extended.

With reference to FIGS. 1 and 4-5, according to one aspect of the present invention, top wall top face 14 may be generally concave and outer skirt 18 may include an annular rim 28 extending upwardly from the top face 14 around the perimeter of the top wall 12. In accordance with one non-limiting aspect of the present invention, a distance from a plane defined by the rim 28 to the top face 14 may vary from approximately 2,413 mm (.095 inches) near the rim 28 to approximately 2,667 mm (.105 inches) at or near the center of the top wall 12. As such, the distance from the center of the top face 14 of the top wall 12 to the plane defined by the rim 28 may be about 10%, 15%, or 20% of the overall height of the bottle cap 10. However, it is understood that the bottle cap 10 is not limited to these absolute or relative dimensions. It is also understood that the term "concave" as used herein is not restricted to describing a surface with a constant radius of curvature, but rather is used to denote the general appearance of the surface.

In one embodiment, the concavity of the top wall 12 spans about 80%, 85%, or 90% of the diameter of the bottle cap 10, although other proportions are also contemplated. The concavity of top face 14 allows the shrink sleeve to span partially across the concavity, and is of sufficient diameter to offer an avenue for a finger or fingernail of a consumer to gain easier access to an edge of the shrink sleeve on the bottle cap 10. The size of the concave top face 14 also provides an ergonomic surface which cooperates with the natural curve of a consumer's finger to aid in removing the shrink sleeve packaging.

With continuing reference to FIGS. 1 and 4-5, the rim 28 may serve several purposes. As described above, one purpose may be to exaggerate the height difference between the shrink sleeve and the concavity of top face 14, allowing a consumer easy access to the edge of the shrink sleeve to facilitate its removal. A second purpose of the rim 28 may be to reinforce the bottle cap 10 to resist breakage should the container be dropped or the cap 10 otherwise impact a hard surface. A minimal amount of plastic material is required for construction of the rim 28, which produces a light yet strong bottle cap 10. In one embodiment, the rim 28 may have a thickness of about 10% or 15% of the diameter of the bottle cap 10, although other proportions are also contemplated. Maintaining a lightweight bottle cap 10 is cost effective and promotes fast cycle times during the injection molding process. Still further, the combination of the rim 28 and the steepness of its angled connection with the concave top face 14 create a unique "shadow box" effect to highlight any indicia provided on the top face 14, such as a logo 30 as depicted in FIG. 1. A consumer's eye may be drawn to the recessed logo 30 and the contrast between the logo 30 and the background, and thus this configuration may create a unique, three-dimensional brand identity. Of course, it is understood that the specific logo 30 depicted herein is purely exemplary, and that other logos or indicia are fully contemplated according to the present invention.

While aspects of the invention have been illustrated and described, it is not intended that these aspects illustrate and describe all possible forms of the invention. It is understood that the features of various implementing aspects may be combined to form further aspects of the invention. The words used in the specification are words of description rather than limitation, and it is understood that various changes may be made without departing from the scope of the invention as defined by the appended claims.

## Claims

1. A cap (10) for sealing a container having a neck, the cap comprising:
an annular outer skirt (18) having an inner surface and an outer surface, a top portion of the outer skirt forming an annular rim (28); a top wall (12) extending inwardly below a plane defined by the rim, the top wall having a top face and a bottom face;
an annular inner skirt (26) extending downward from the top wall bottom face and disposed radially inward from and concentric with the outer skirt, wherein the inner skirt is configured to sealingly engage with an inner surface of the container neck when the cap is attached thereto; and
a threaded portion (24) on the inner surface of the outer skirt for cooperating with a corresponding threaded portion on an outer surface of the container neck;
wherein the length of said annular inner skirt is less than the length of said annular outer skirt,
**characterised in that** the top wall is generally concave and extends from the plane defined by the rim.

2. The cap according to claim 1, further comprising a shrink sleeve disposed around the outer skirt (18) and the rim (28) and partially spanning the top wall (12), a space being defined between the top wall and the shrink sleeve such that at least part of a finger fits therebetween for facilitating removal of the shrink sleeve.

3. The cap according to claim 1, wherein the diameter of the concave top wall (12), is at least about 80% of the diameter of the cap.

4. The cap according to claim 1, wherein the distance from the center of the top wall top face (14) to the plane defined by the rim is at least about 10% of the height of the cap.

5. The cap according to claim 1, wherein the top face of the top wall includes indicia (30).

6. The cap according to claim 5, wherein the top wall (12) extends inwardly at a steep angle proximate to the rim (28) such that a shadow is formed around a periphery of the top wall, thereby creating a shadow box effect with respect to the indicia (30).

7. The cap according to claim 1, wherein the outer skirt (18), the top wall (12), and the inner skirt (26) are integrally formed from a copolymer of polypropylene and ethylene-propylene to reduce brittleness and increase impact resistance of the cap.

8. The cap according to claim 1, wherein the inner skirt (26) includes an inwardly tapered portion for facilitating locating the inner skirt with respect to the inner surface of the container neck.

9. The cap according to claim 1, wherein the outer surface of the outer skirt (18) includes a plurality of ribs.

10. The cap according to claim 1, wherein the length of said annular inner skirt (26) is about 20% of the length of said annular outer skirt (18).

## Patentansprüche

1. Kappe (10) zum Abdichten eines Behälters, der einen Hals hat, wobei die Kappe aufweist:
eine ringförmige äußere Einfassung (18), die eine innere Fläche und eine äußere Fläche hat, wobei ein oberster Abschnitt der äußeren Einfassung einen ringförmigen Rand (28) formt,
eine oberste Wand (12), die sich unter einer durch den Rand definierten Ebene nach innen erstreckt, wobei die oberste Wand eine obere Fläche und eine untere Fläche hat,
eine ringförmige innere Einfassung (26), die sich von der unteren Fläche der obersten Wand nach unten erstreckt und die radial nach innen von und konzentrisch mit der äußeren Einfassung angeordnet ist, wobei die innere Einfassung konfiguriert ist, um mit einer inneren Fläche des Behälterhalses dichtend in Eingriff zu stehen, wenn die Kappe daran befestigt ist,
und
einen Gewindeabschnitt (24) auf der inneren Fläche der äußeren Einfassung zum Kooperieren mit einem entsprechenden Gewindeabschnitt auf einer äußeren Fläche des Behälterhalses,
wobei die Länge der ringförmigen inneren Einfassung geringer als die Länge der ringförmigen äußere Einfassung ist, **dadurch gekennzeichnet, dass** die oberste Wand im Allgemeinen konkav ist und sich von der Ebene her erstreckt, die durch den Rand definiert ist.

2. Kappe nach Anspruch 1, die außerdem eine Schrumpfhülse aufweist, die um die äußere Einfassung (18) und den Rand (28) herum angeordnet ist und die teilweise die oberste Wand (12) umspannt, wobei
ein Raum zwischen der oberen Wand und der Schrumpfhülse definiert wird, so dass zumindest ein Teil eines Fingers dazwischen passt, um das Entfernen der Schrumpfhülle zu erleichtern.

3. Kappe nach Anspruch 1, wobei der Durchmesser der konkaven obersten Wand (12) zumindest ungefähr 80% des Durchmessers der Kappe ist.

4. Kappe nach Anspruch 1, wobei die Entfernung vom Zentrum der obersten Fläche (14) der obersten Wand bis zu der durch den Rand definierten Ebene zumindest ungefähr 10% von der Höhe der Kappe ist.

5. Kappe nach Anspruch 1, wobei die obere Fläche der obersten Wand Zeichen (30) aufweist.

6. Kappe nach Anspruch 5, wobei die oberste Wand (12) sich einwärts in einem steilen Winkel unmittelbar zum Rand (28) erstreckt, so dass ein Schatten um eine Peripherie der oberen Wand herum geformt ist, wodurch einen Schaukasteneffekt in Bezug auf die Zeichen (30) erschaffen wird.

7. Kappe nach Anspruch 1, wobei die äußere Einfassung (18), die oberste Wand (12), und die innere Einfassung (26) aus einem Kopolymer von Polypropylen und Ethylen-Propylen einstückig geformt sind, um die Sprödigkeit zu reduzieren und die Schlagfestigkeit der Kappe zu erhöhen.

8. Kappe nach Anspruch 1, wobei die innere Einfassung (26) einen nach innen konisch geformten Abschnitt zum Vereinfachen des Lokalisierens der inneren Einfassung in Bezug auf die innere Fläche des Behälterhalses aufweist.

9. Kappe nach Anspruch 1, wobei die äußere Fläche der äußeren Einfassung (18) eine Vielzahl von Rippen aufweist.

10. Kappe nach Anspruch 1, wobei die Länge der ringförmigen inneren Einfassung (26) ungefähr 20% von der Länge der ringförmigen äußeren Einfassung (18) ist.

## Revendications

1. Bouchon (10) utilisé pour fermer un récipient comportant un goulot, le bouchon comprenant :
une jupe extérieure annulaire (18) comportant une surface intérieure et une surface extérieure, la partie supérieure de la jupe extérieure formant un rebord annulaire (28) ;
une paroi supérieure (12) se prolongeant vers l'intérieur, sous une surface plane définie par le rebord, la paroi supérieure comportant une face supérieure et une face inférieure ;
une jupe intérieure annulaire (26) se prolongeant vers le bas depuis la face inférieure de la paroi supérieure et disposée dans le sens radial vers l'intérieur et concentrique par rapport à la jupe extérieure, dans lequel la jupe intérieure est configurée pour s'engager en se mettant à l'échelle, avec la surface intérieure du goulot du récipient lorsque le bouchon y est fixé ; et
une partie taraudée (24) sur la surface intérieure de la jupe extérieure prévue pour coopérer avec la partie filetée située sur la surface extérieure du goulot du récipient ;
dans lequel la longueur de ladite jupe intérieure annulaire est inférieure à la longueur de ladite jupe extérieure annulaire,
**caractérisé par le fait que** la paroi supérieure est généralement de forme concave et se prolonge depuis la surface plane définie par le rebord.

2. Bouchon selon la revendication 1, comprenant en outre un manchon rétractable disposé autour de la jupe extérieure (18) et du rebord (28) et recouvrant partiellement la paroi supérieure (12),
un espace étant défini entre la paroi supérieure et le manchon rétractable, de sorte qu'au moins une partie d'un doigt puisse s'insérer entre ceux-ci, afin de faciliter le retrait du manchon rétractable.

3. Bouchon selon la revendication 1, dans lequel le diamètre de la paroi supérieure concave (12) est égal à au moins 80 % du diamètre du bouchon.

4. Bouchon selon la revendication 1, dans lequel la distance depuis le centre de la face supérieure de la paroi supérieure (14) par rapport à la surface plane définie par le rebord est égale à au moins environ 10 % de la hauteur du bouchon.

5. Bouchon selon la revendication 1, dans lequel la face supérieure de la paroi supérieure comprend une vignette (30).

6. Bouchon selon la revendication 5, dans lequel la paroi supérieure (12) se prolonge vers l'intérieur, selon un angle aigu à proximité du rebord (28), de sorte qu'une ombre est formée sur la périphérie de la paroi supérieure, créant ainsi un effet d'encadrement par rapport à la vignette (30).

7. Bouchon selon la revendication 1, dans lequel la jupe extérieure (18), la paroi supérieure (12) et la jupe intérieure (26) sont entièrement formées dans un copolymère de polypropylène et d'éthylène-propylène afin de réduire la fragilité et d'augmenter la résistance aux chocs du bouchon.

8. Bouchon selon la revendication 1, dans lequel la jupe intérieure (26) inclut une partie biseautée vers l'intérieur, visant à faciliter la mise en place de la jupe intérieure par rapport à la surface intérieure du goulot du récipient.

9. Bouchon selon la revendication 1, dans lequel la surface extérieure de la jupe extérieure (18) inclut une pluralité de nervures.

10. Bouchon selon la revendication 1, dans lequel la longueur de ladite jupe intérieure annulaire (26) est d'environ 20 % de la longueur de ladite jupe extérieure annulaire (18).
